# EUROPEAN PATENT APPLICATION

(11) **EP 3 255 309 A1**
(43) Date of publication of application: **13.12.2017**
(21) Application number: 17173766.1
(22) Date of filing: 31.05.2017
(51) Int. Cl.: F16H 25/22

(54) **BALL SCREW DEVICE, STEERING SYSTEM USING BALL SCREW DEVICE, AND METHOD FOR PRODUCING RETAINER OF BALL SCREW DEVICE**

(30) Priority: 01.06.2016 JP 2016110461
(71) Applicant: JTEKT CORPORATION, Osaka-shi, Osaka 542-8502 (JP)
(72) Inventor: ASAKURA, Toshihiro, Osaka-shi,, Osaka 542-8502 (JP); NAKAYAMA, Takuya, Osaka-shi,, Osaka 542-8502 (JP); OGAWA, Keisuke, Osaka-shi,, Osaka 542-8502 (JP); KURIKI, Hajime, Tochigi 321-0121 (JP); WATANABE, Akira, Tochigi 321-0121 (JP); SEKIGUCHI, Tatsuya, Tochigi 321-0121 (JP)
(74) Representative: Winter, Brandl, Fürniss, Hübner, Röss, Kaiser, Polte - Partnerschaft mbB

(57) **Abstract**

A ball screw device including a low-cost retainer that is disposed between a ball screw shaft and a ball nut and has a flange portion, a steering system using the ball screw device, and a method for producing the retainer of the ball screw device are provided. The ball screw device (40) includes the ball screw shaft (20), the ball nut (21), rolling balls (24), and the retainer (27). Both side surfaces (26a, 26b) of each of retainer grooves (26) are formed so as to allow radially outward movement of the rolling balls (24) and to restrict radially inward movement thereof, and the retainer (27) has a weld joint (27c1, 27c2) at both of the opposite ends of each retainer groove (26) in the axial direction of the retainer.

## Description

### BACKGROUND OF THE INVENTION

### 1. Field of the Invention

The present invention relates to a ball screw device, a steering system using the ball screw device, and a method for producing a retainer of the ball screw device.

### 2. Description of Related Art

In related arts, ball screw devices as described in Japanese Patent No. 5120040 (JP 5120040), Japanese Utility Model Application Publication No. 2-5145, Japanese Patent Application Publication No. 6-288458 are known, in each of which a cage (retainer) is disposed between a ball screw shaft and a ball nut. The retainer has a plurality of elongated holes (retainer grooves) formed in a cylindrical portion thereof and configured to retain rolling balls in a rollable manner. These retainer grooves are formed, in the cylindrical portion, with wall portions each of which is positioned between adjacent retainer grooves in a circumferential direction, and the balls are retained by the retainer grooves. By this configuration, in the respective retainer grooves, balls adjacent in a raceway are retained while being reliably separated from each other by the width of each wall portion, which eliminates the possibility that the adjacent rolling balls come into contact with each other, and thus increase of running torque due to sliding resistance can be prevented.

In the related art described above, in order to produce the retainer at low cost, it is often the case that a thin metal plate material is stamped out, bending such as forming is performed on the stamped-out workpiece to roll up the workpiece in a cylindrical shape, and both end portions of the workpiece thus rolled up are joined to each other by welding, for example, to form the retainer. However, when the retainer is formed by such a production method, a situation may occur in which temperature around the welded portions of the retainer locally increases due to the influence of heat during welding, whereby the retainer grooves formed in the cylindrical portion of the retainer are distorted, and a desired shape cannot be maintained. In particular, when the shapes of both side surfaces of each retainer groove are accurately formed as described in JP 5120040 such that the retainer groove allows movement of the balls toward the radial outside of the retainer and restricts movement of the balls toward the radial inside of the retainer, if distortion increases, the functions described above cannot be maintained. In other words, the yield of retainers during production may decrease, and accordingly the cost may increase.

### SUMMARY OF THE INVENTION

An object of the present invention is to provide a ball screw device including a low-cost retainer that is disposed between a ball screw shaft and a ball nut and has a flange portion, a steering system using the ball screw device, and a method for producing the retainer of the ball screw device.

A ball screw device according to one aspect of the present invention includes: a ball screw shaft having an outer-peripheral surface on which an outer-peripheral ball rolling groove is spirally formed; a ball nut having an inner-peripheral surface on which an inner-peripheral ball rolling groove is spirally formed; rolling balls arranged between the outer-peripheral ball rolling groove and the inner-peripheral ball rolling groove in a circulatable manner; and a retainer disposed between an outer periphery of the ball screw shaft and an inner periphery of the ball nut, and having a cylindrical portion with a retainer groove that retains the rolling balls. Both side surfaces of the retainer groove are formed so as to allow movement of the rolling balls toward a radial outside of the retainer and to restrict movement of the rolling balls toward a radial inside of the retainer. The retainer has a weld joint at both of opposite ends of the retainer groove in an axial direction of the retainer.

As described above, the retainer has the weld joints at the opposite ends of the retainer groove in the axial direction of the retainer. In other words, the weld joints are formed in small areas at the opposite ends of the retainer groove, instead of being formed along, for example, all the length of the retainer in the axial direction. Thus, the weld joints can be joined to each other with a configuration of butt joint, for example, in a shorter time than in the case that long weld joints are joined to each other. This can suppress temperature increase around the welded portions of the retainer, and thus deformation of the retainer groove caused by the welding can be satisfactorily suppressed. Thus, the yield of retainers during production can be increased, and the cost of each retainer and consequently the cost of the ball screw device using the retainer can be reduced.

In another aspect of the present invention, a steering system including the ball screw device according to the aspect described above is provided. Thus, a low-cost steering system produced with a low-cost ball screw device can be provided.

In still another aspect of the present invention, a method for producing a retainer used in the ball screw device according to the aspect described above is provided. This production method includes: stamping out a flat plate to form a first workpiece that is a plate member having a workpiece groove corresponding to the retainer groove and workpiece edges corresponding to the weld joints; rolling up the first workpiece to form a second workpiece that has a first plate portion corresponding to the cylindrical portion and having a shape identical to that of the cylindrical portion; and joining the workpiece edges at circumferential ends of the second workpiece to each other by welding to form the retainer. By this method, similarly to the case of the ball screw device, a low-cost retainer in which distortion of the retainer groove is small can be provided.

### BRIEF DESCRIPTION OF THE DRAWINGS

The foregoing and further features and advantages of the invention will become apparent from the following description of example embodiments with reference to the accompanying drawings, wherein like numerals are used to represent like elements and wherein:
FIG. 1 is a schematic diagram illustrating an entire configuration of a steering system including a ball screw device according to an embodiment;
FIG. 2 is a sectional view illustrating a configuration of the ball screw device in FIG. 1;
FIG. 3 is a sectional view of a cylindrical portion of a retainer, taken in a plane orthogonal to the axis of the retainer;
FIG. 4 is a diagram illustrating a state of contact between the retainer and a rolling ball;
FIG. 5A is a diagram of the retainer according to a first embodiment when viewed from a flange side in the axial direction;
FIG. 5B is a diagram of the retainer in FIG. 5A when viewed from below;
FIG. 6 is a sectional view taken along the line VI-VI of FIG. 5B as viewed in the direction indicated by the arrows;
FIG. 7 is a diagram of a retainer according to another aspect, corresponding to FIG. 5A;
FIG. 8 is a flowchart of a method for producing the retainer;
FIG. 9 is a diagram illustrating a shape of a first workpiece of the retainer according to the first embodiment;
FIG. 10 is a diagram illustrating a workpiece flange portion of the first workpiece of the retainer according to the first embodiment when being bent;
FIG. 11A is a diagram for explaining a first die-molding step for forming a second workpiece of the retainer according to the first embodiment;
FIG. 11B is a diagram for explaining a second die-molding step for forming the second workpiece of the retainer according to the first embodiment;
FIG. 11C is a diagram for explaining a third die-molding step for forming the second workpiece of the retainer according to the first embodiment;
FIG. 11D is a diagram for explaining a fourth die-molding step for forming the second workpiece of the retainer according to the first embodiment;
FIG. 12A is a diagram of a retainer according to a second embodiment, corresponding to FIG. 5A;
FIG. 12B is a diagram of the retainer in FIG. 12A when viewed from below;
FIG. 13A is a diagram of a retainer according to a third embodiment, corresponding to FIG. 5A;
FIG. 13B is a diagram of the retainer in FIG. 13A when viewed from below; and
FIG. 14 is a diagram illustrating a notch according to another aspect formed in a flange portion of the retainer, corresponding to FIG. 5A.

### DETAILED DESCRIPTION OF EMBODIMENTS

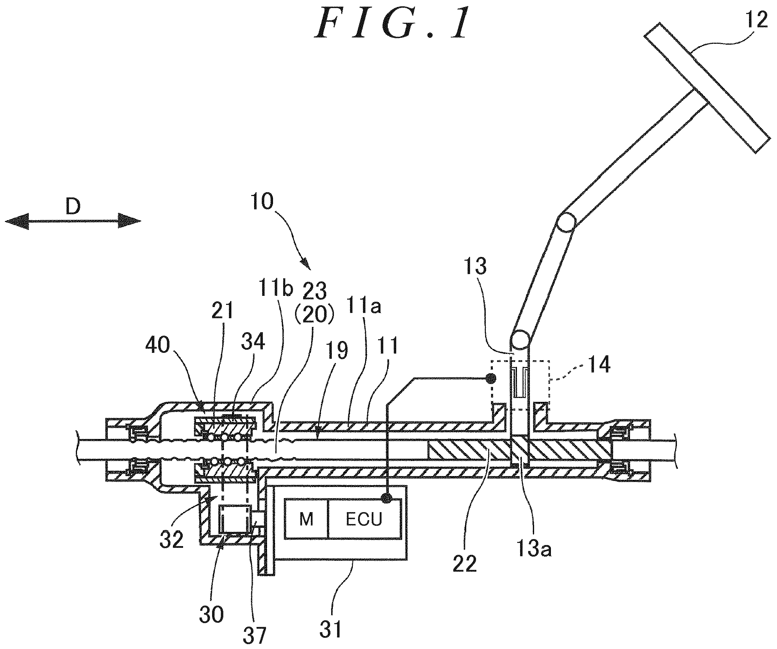

A first embodiment of the present invention will now be described with reference to the drawings. FIG. 1 is a diagram of an entire configuration of an electric power steering system, illustrating a mode in which a ball screw device according to the present invention is used in the electric power steering system (corresponding to a steering system) of a vehicle.

The electric power steering system is a steering system that assists steering steering operation shaftforce with steering assist force. The ball screw device of the present invention may be used in various systems in which the ball screw device can be used, such as a four-wheel steering system, a rear-wheel steering system, a steer-by-wire steering system in addition to the electric power steering system.

The following describes a configuration of this steering system 10. The electric power steering system 10 (hereinafter simply called "steering system 10") is a system that changes the orientation of steered wheels (not depicted) of a vehicle by moving a steering operation shaft 19 coupled to the steered wheels in a reciprocating manner in an axial direction D (lateral direction in FIG. 1).

As depicted in FIG. 1, the steering system 10 includes a housing 11, a steering wheel 12, a steering shaft 13, a torque detection device 14, an electric motor M (hereinafter called "motor M"), the steering operation shaft 19, a steering assist mechanism 30, and a ball screw device 40.

The housing 11 is a fixed member that is fixed to the vehicle. The housing 11 is formed in a tubular shape through which the steering operation shaft 19 is disposed so as to be relatively movable in the axial direction D. The housing 11 includes a first housing 11a and a second housing 11b that is fixed to one end (left side in FIG. 1) of the first housing 11a in the axial direction D.

The steering wheel 12 is fixed to an end portion of the steering shaft 13, and is rotatably supported in a passenger compartment. The steering shaft 13 transmits torque applied to the steering wheel 12 by operation of a driver to the steering operation shaft 19.

On an end portion of the steering shaft 13 on the steering operation shaft 19 side, a pinion 13a that is a component of a rack-and-pinion mechanism is formed. The torque detection device 14 detects torque applied to the steering shaft 13 on the basis of the amount of torsion in the steering shaft 13.

The steering operation shaft 19 extends in the axial direction D. The steering operation shaft 19 is supported by the housing 11 so as to be linearly movable in a reciprocating manner along the axial direction D. On the steering operation shaft 19, a rack 22 is formed. The rack 22 meshes with the pinion 13a of the steering shaft 13, and constitutes the rack-and-pinion mechanism together with the pinion 13a. For the rack-and-pinion mechanism, depending on the application purpose, for example, of the steering system 10, the maximum axial force that can be transmitted between the steering shaft 13 and the steering operation shaft 19 is set.

On the steering operation shaft 19, a ball screw portion 23 (corresponding to the ball screw shaft 20) is formed in a position different from that of the rack 22. The ball screw portion 23 constitutes the ball screw device 40 together with a ball nut 21 described later, and steering assist force is transmitted thereto by the steering assist mechanism 30. Both ends of the steering operation shaft 19 are coupled to right and left steered wheels (not depicted) via tie rods and knuckle arms (not depicted), for example. The steered wheels are steered right and left by axial movement of the steering operation shaft 19.

The steering assist mechanism 30 is a mechanism that uses the motor M as a driving source to apply steering assist force to the steering operation shaft 19. The steering assist mechanism 30 includes the motor M, a control unit ECU for driving the motor M, and a driving-force transmission mechanism 32. The motor M and the control unit ECU for driving the motor M are housed in a case 31 that is fixed to the first housing 11a of the housing 11. The control unit ECU determines a steering assist torque based on an output signal of the torque detection device 14 to control the output of the motor M.

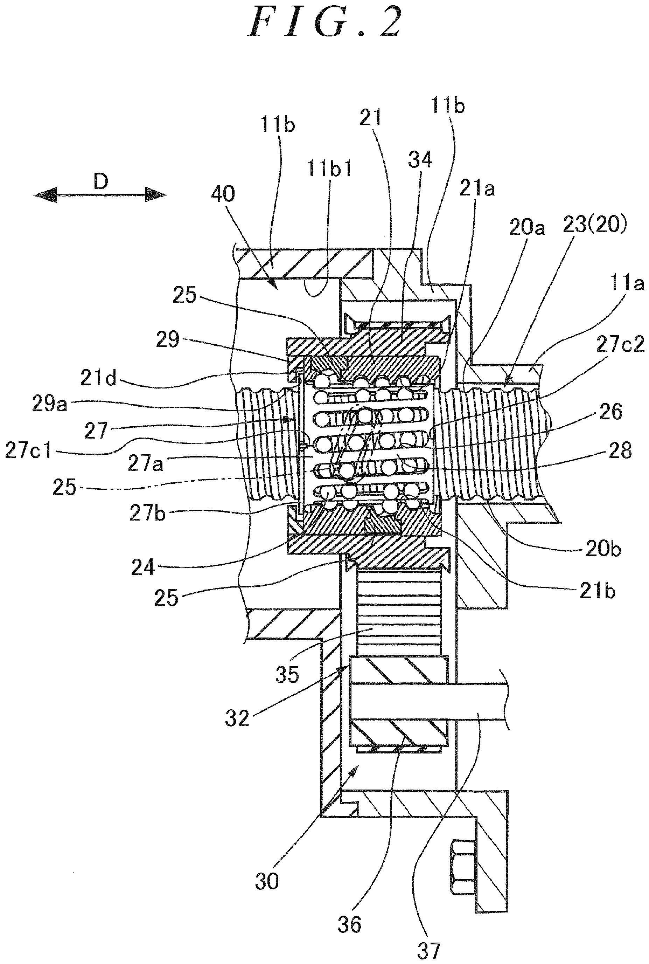

As depicted in FIG. 2, the driving-force transmission mechanism 32 includes a drive pulley 36, a driven pulley 34, and a toothed belt 35. The drive pulley 36 is attached to an output shaft 37 of the motor M. The output shaft 37 is disposed parallel to the axis of the steering operation shaft 19. The driven pulley 34 is disposed on an outer periphery of the ball nut 21 so as to be rotatable integrally with the ball nut 21. The driven pulley 34 on one end side (left side in FIG. 2) in the axial direction is rotatably supported by an inner peripheral surface 11b1 of the second housing 11b with a ball bearing (not depicted) interposed therebetween. The toothed belt 35 is wound around the drive pulley 36 and the driven pulley 34. The driving-force transmission mechanism 32 transmits rotational driving force generated by the motor M with the toothed belt 35 between the drive pulley 36 and the driven pulley 34.

The following describes a configuration of the ball screw device 40. As depicted in FIG. 2, the ball screw device 40 includes the ball screw portion 23 of the steering operation shaft 19, the ball nut 21, a plurality of rolling balls 24, deflectors 25, a retainer 27, and a wall member 29. The ball screw portion 23 of the steering operation shaft 19 has an outer-peripheral ball rolling groove 20a spirally formed on its outer-peripheral surface. The ball screw device 40 is housed mainly in the second housing 11b.

The ball nut 21 is disposed on the outer peripheral side of the ball screw portion 23. The inner peripheral surface of the ball nut 21 has an inner-peripheral ball rolling groove 21a that is spirally formed. The rolling balls 24 are arranged so as to roll in a ball track formed between the outer-peripheral ball rolling groove 20a of the ball screw portion 23 and the inner-peripheral ball rolling groove 21a of the ball nut 21 and be circulatable. The deflectors 25 are members configured to circulate the rolling balls 24 between an adjacent pair of the ball rolling grooves 20a and 21a, and are provided in plurality on the circumference of the ball nut 21.

The wall member 29 is attached to an end surface 21d of the ball nut 21, and has an end surface 29a that faces the end surface 21d of the ball nut 21 with a clearance therebetween. The size of the clearance between the end surface 21 d and the end surface 29a is a size that allows a flange portion 27b of the retainer 27 described later to be inserted therein. The wall member 29 may be attached to any position as long as the wall member has the end surface 29a that faces the end surface 21d of the ball nut 21 with the clearance therebetween. For example, the wall member 29 may be attached to an end surface of the driven pulley 34. Alternatively, the wall member 29 may be attached to part of the second housing 11b. Still alternatively, the wall member may be formed by part of the second housing 11b.

The retainer 27 has a cylindrical portion 27a having a thin cylindrical shape, a flange portion 27b that is formed on an end surface of one end (left side in FIG. 2) of the cylindrical portion 27a and that can be in contact with the end surface 21d of the ball nut 21, and butt joints 27c1 and 27c2 (corresponding to weld joints). The cylindrical portion 27a is disposed between the outer periphery 20b of the ball screw shaft 20 and the inner periphery 21b of the ball nut 21. The retainer 27 also has, on the circumference of the cylindrical portion 27a, a plurality of retainer grooves 26 configured to retain the rolling balls 24.

As depicted in FIG. 2, the retainer grooves 26 each have an elongated-hole shape that extends in the axial direction D of the steering operation shaft 19 (ball screw shaft), and are formed so as to be arranged at regular angular intervals (at a constant pitch) on the circumference of the cylindrical portion 27a. Herein, separating portions 28 each of which separates circumferentially adjacent retainer grooves 26 in the cylindrical portion 27a each have a width dimension that is sufficiently smaller than the diameter dimension of the rolling balls 24. This enables a sufficient number of rolling balls 24 to be arranged in the cylindrical portion 27a of the retainer 27 so as to satisfy the load-carrying capacity of the ball screw device 40.

Each retainer groove 26 is inclined at a predetermined angle with respect to the axis of the ball screw shaft 20 (the axis of the retainer 27) so as to be orthogonal to the respective ball rolling grooves 20a and 21 a of the ball screw shaft 20 and the ball nut 21. In other words, each retainer groove 26 is formed so as to be inclined by the lead angle of the ball rolling grooves 20a and 21a and be orthogonal to the respective ball rolling grooves 20a and 21 a. However, the present invention is not limited to this, and the retainer groove 26 may be formed so as to be parallel to the axis of the ball screw shaft 20.

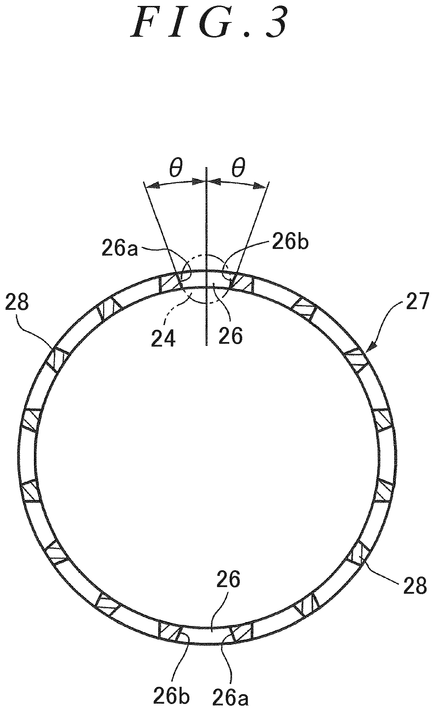

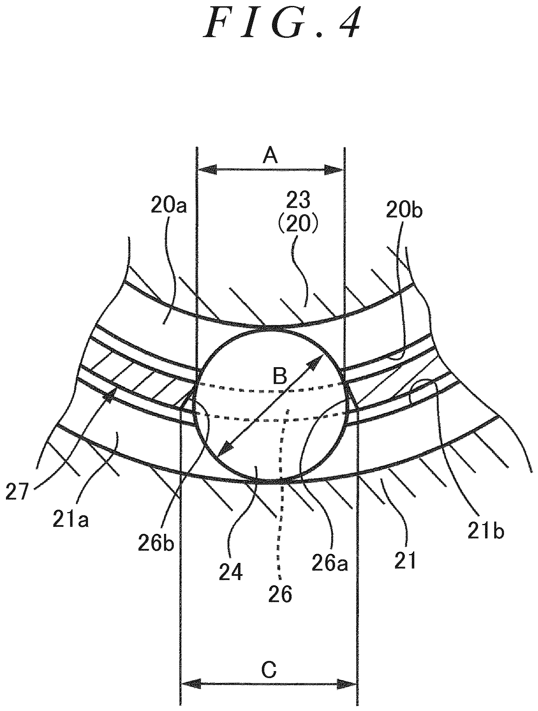

As depicted in a cross-section orthogonal to the axis of the retainer 27 in FIG. 3, both side surfaces of each retainer groove 26 are formed by inclined surfaces. Specifically, both side surfaces are formed by inclined surfaces 26a and 26b each of which is inclined by a predetermined angle θ such that the groove width therebetween increases toward the radial outside of the cylindrical portion 27a. In other words, the cross-sectional shape of the retainer groove 26 is a downward-widening shape formed by the inclined surfaces 26a and 26b. As depicted in FIG. 4, with the inclined surfaces 26a and 26b, the groove width of the retainer groove 26 is formed so as to be smaller than the diameter dimension B of the rolling balls 24 in the inner periphery of the retainer 27 and be greater than the diameter dimension B of the rolling balls 24 in the outer periphery of the retainer 27. In other words, when the groove width in the inner periphery of the retainer 27 is a groove width A and the groove width in the outer periphery of the retainer 27 is a groove width C, a relationship of A < B < C is satisfied.

Thus, with the inclined surfaces 26a and 26b (both side surfaces) of the retainer grooves 26, the retainer 27 allows movement of the rolling balls 24 toward the radial outside of the retainer 27 and restricts movement of the rolling balls 24 toward the radial inside of the retainer 27. Consequently, as depicted in FIG. 4, the inclined surfaces 26a and 26b of the retainer groove 26 positioned at the bottom part in contact with the rolling balls 24 rolling between the ball screw shaft 20 and the ball nut 21, whereby radial (downward in FIG. 4) movement of the retainer 27 is restricted, and thus the retainer 27 is prevented from coming into contact with the outer periphery 20b of the ball screw shaft 20 or the inner periphery 21b of the ball nut 21.

Thus, even if the clearance between the outer periphery (surface) 20b of the ball screw shaft 20 and the inner periphery (surface) 21b of the ball nut 21 is small, contact of the retainer 27 with the ball screw shaft 20 or with the ball nut 21 and resultant wear therebetween caused by the radial movement of the retainer 27 can be prevented, and increase of friction and generation of noises due to the contact of the retainer 27 with the ball screw shaft 20 or with the ball nut 21 can be suppressed. As described above, the retainer grooves 26 have a function of accurately controlling and maintaining the relative position between the rolling balls 24 and the retainer 27.

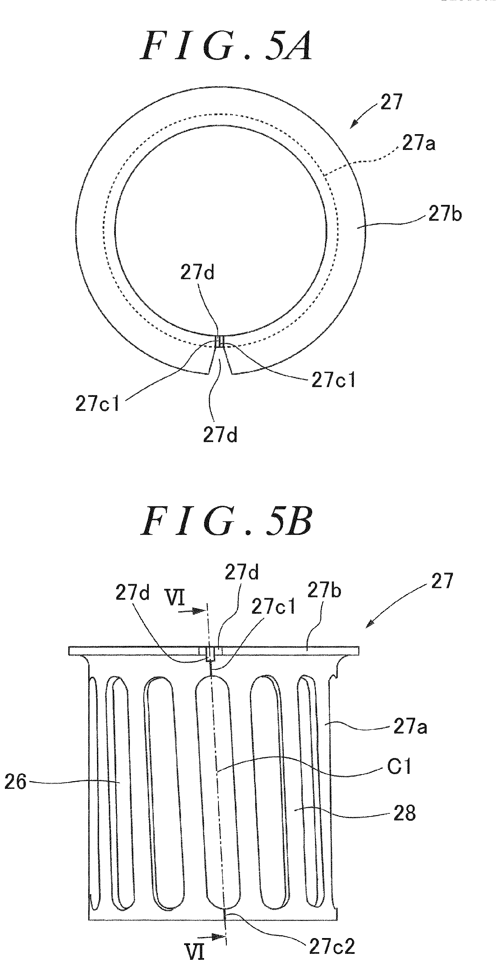

As depicted in FIG. 5A and FIG. 5B, the flange portion 27b is formed in an annular shape, and has a notch 27d formed in part thereof in the circumferential direction. As depicted in FIG. 2, the flange portion 27b is disposed between the end surface 29a of the wall member 29 and the end surface 21d of the ball nut 21, whereby axial movement of the retainer 27 is restricted.

As depicted in FIG. 5B, on axially opposite ends of one retainer groove 26 among the retainer grooves 26, butt joints 27c1 and 27c2 (weld joints) are formed. The butt joints 27c1 and 27c2 are formed in the cylindrical portion 27a at both ends of this retainer groove 26 in the axial direction of the retainer 27. The butt joints 27c1 and 27c2 are formed on a central axis C1 of the retainer groove 26. The butt joints 27c1 and 27c2 are joint portions on the cylindrical portion 27a side and on the flange portion 27b side, respectively. By this design in which the joint portions are formed in the positions described above, the retainer 27 can be produced accurately at low cost. Detailed reasons for this will be described later.

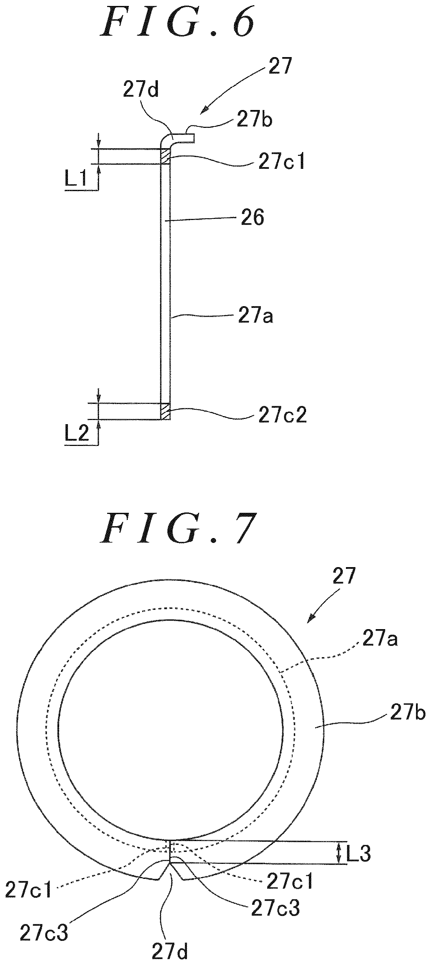

As depicted in FIG. 6, the respective joint lengths (weld lengths) L1 and L2 of the butt joints 27c1 and 27c2 at the opposite ends of the retainer groove 26 are the same (L1 = L2). Herein, the respective lengths of the butt joints 27c1 and 27c2 are the same as the respective joint lengths (weld lengths). In other words, the respective joint lengths extend along the respective entire lengths of the butt joints 27c1 and 27c2.

The notch 27d is formed at the same position as that of the butt joints 27c1 in the circumferential direction of the flange portion 27b (see FIG. 5A). In other words, the butt joints 27c1 on the flange portion 27b side in the cylindrical portion 27a are interrupted by the notch 27d formed in the flange portion 27b, and are formed only in the cylindrical portion 27a. In the present embodiment, in order to adjust the length of the butt joints 27c1, the notch 27d is formed not only in the flange portion 27b, but is also partially formed in the cylindrical portion 27a (see FIG. 5B).

The present embodiment has been described in which the flange portion 27b does not have a butt joint, and has only the notch 27d. However, the present invention is not limited to this. According to another aspect, the flange portion 27b may have both of butt joints 27c3 and the notch 27d as depicted in FIG. 7. In this case, the length of the length L1 of the butt joints 27c1 of the cylindrical portion 27a on the flange portion 27b side is preferably set shorter such that the total length (L1 + L3) of the length L1 and the length L3 of the butt joints 27c3 of the flange portion 27b is equal to the length L2 of the butt joints 27c2 of cylindrical portion 27a on the side where the flange portion 27b is not positioned (on the opposite side from the flange portion 27b).

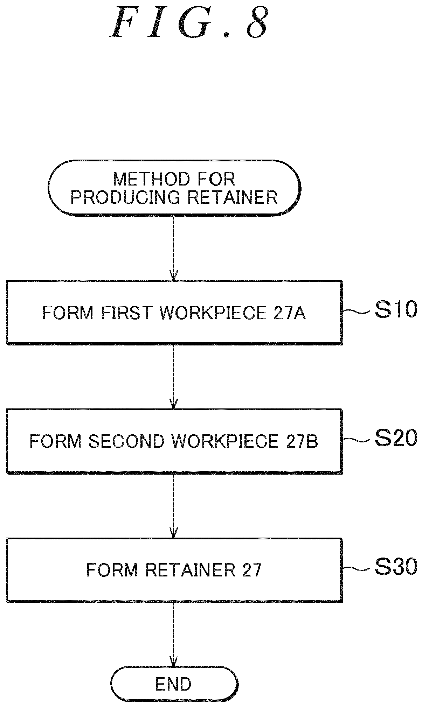

The following describes a method for producing the retainer 27 with reference to the flowchart of FIG. 8, FIG. 9, FIG. 10, and FIG. 13A to FIG. 13D. The method for producing the retainer 27 according to the present invention includes a step S10 to a step S30 (see FIG. 8).

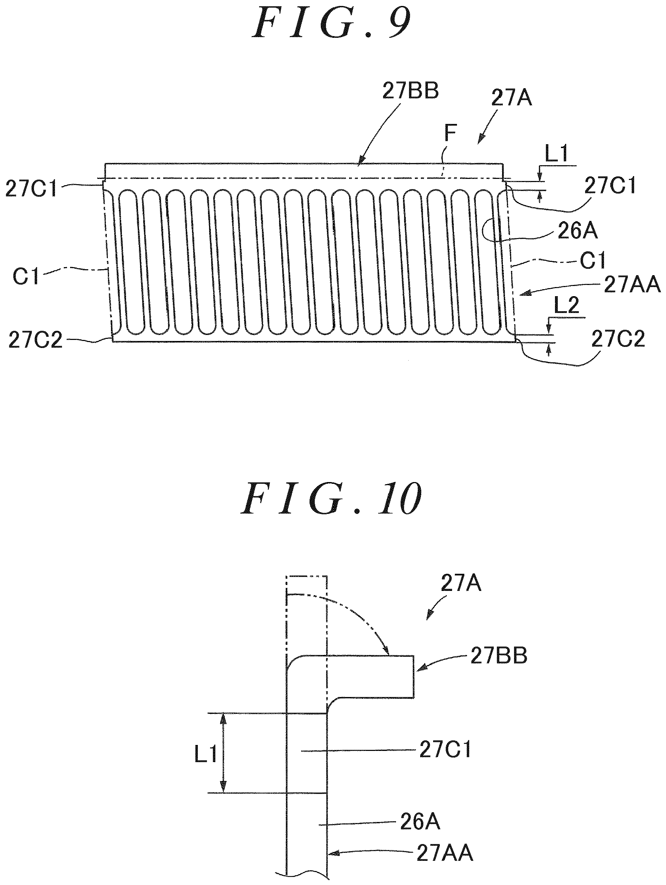

At the step S10, as depicted in FIG. 9, a thin flat plate made of ferrous material, for example, is stamped out to form a first workpiece 27A that is a plate member having a plurality of workpiece grooves 26A that pass therethrough in the plate thickness direction and correspond to the retainer grooves 26, and having workpiece edges 27C1 and 27C2 that correspond to the butt joints 27c1 and 27c2 (corresponding to weld joints) at both ends (side surfaces) of the plate member. The term "workpiece edges" herein is a designation of joints before being welded together in the first workpiece 27A, corresponding to the butt joints 27c1 and 27c2 that are welded joints.

The first workpiece 27A includes a workpiece cylindrical portion 27AA (corresponding to a first plate portion) that corresponds to the cylindrical portion 27a of the retainer 27 and a workpiece flange portion 27BB (corresponding to a second plate portion) that corresponds to the flange portion 27b of the retainer 27. The workpiece grooves 26A corresponding to the retainer grooves 26 are formed in the workpiece cylindrical portion 27AA The workpiece cylindrical portion 27AA is formed below a bend line F (long dashed double-short dashed line) of the first workpiece 27A.

At this time, both side surfaces of each workpiece groove 26A are formed so that the shapes of both side surfaces (inclined surfaces 26a and 26b) of the corresponding retainer groove 26 can be obtained when the first workpiece 27A is rolled up to form a cylinder having the same shape as that of the cylindrical portion 27a at the step S20 described below. The workpiece flange portion 27BB is formed above the bend line F of the first workpiece 27A.

In other words, at the step S10, the first workpiece 27A is formed by pressing, which has a shape obtained by cutting the cylindrical portion 27a and the flange portion 27b of the retainer 27 at one location along the axial direction of the retainer 27 and unrolling the resultant shape in a plane. In the present embodiment, as depicted in FIG. 5B and FIG. 9, the cutting location includes both ends of the retainer groove 26 (workpiece groove 26A) in the axial direction of the retainer 27, and extends on the central axis C1 of the retainer groove 26 (workpiece groove 26A).

Thus, the respective workpiece edges 27C1, 27C1, 27C2, and 27C2 are formed that are cut surfaces corresponding to the respective butt joints 27c1, 27c1, 27c2, and 27c2 on both sides of the plate member thus cut. Because the respective workpiece edges 27C1, 27C1, 27C2, and 27C2 are formed as described above, the workpiece edges 27C1 and 27C2 on one end side (left side in FIG. 9) and the workpiece edges 27C1 and 27C2 on the other side (right side in FIG. 9) are parallel to each other. The length L1 of the workpiece edges 27C1 and 27C1 and the length L2 of the workpiece edges 27C2 and 27C2 are the same (L1 = L2).

At the step S20, the workpiece flange portion 27BB (second plate portion) of the first workpiece 27A is bent at the bend line F (see FIG. 10). At this time, both end surfaces (laterally both end surfaces in FIG. 9) of the workpiece flange portion 27BB are formed so as to be parallel to the axis of the cylindrical portion 27a when the cylindrical portion 27a is formed at the step S30.

Subsequently, at the step S20, forming is performed on the first workpiece 27A in which the workpiece flange portion 27BB has been bent, whereby a second workpiece 27B is formed in which the workpiece cylindrical portion 27AA corresponding to the cylindrical portion 27a and the workpiece flange portion 27BB corresponding to the flange portion 27b have the same shapes as those of the cylindrical portion 27a and the flange portion 27b, respectively. In other words, at the step S20, the workpiece cylindrical portion 27AA corresponding to the cylindrical portion 27a is rolled up in a cylindrical shape, and accordingly the workpiece flange portion 27BB that has been bent at the bend line F is formed in a flange shape.

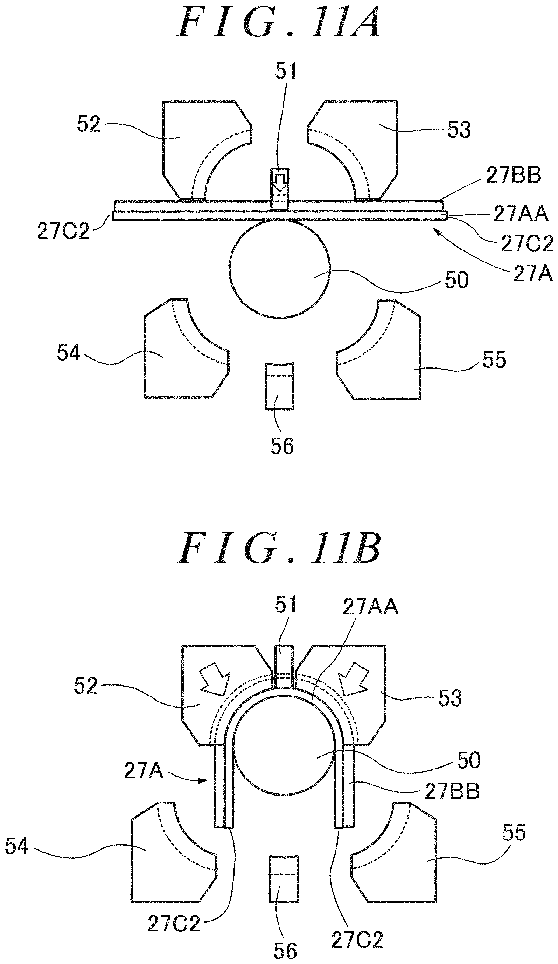

Herein, a method of forming the second workpiece 27B with cylinder-forming dies 51 to 56 at step S20 will be described more specifically. As depicted in FIG. 11A to FIG. 11D, the first workpiece 27A in which the workpiece flange portion 27BB has been bent is wound around the outer-peripheral surface of a core member 50 (see FIG. 11A) having a shape of cylindrical column with its outside diameter being the same as the bore diameter of the cylindrical portion 27a to form the second workpiece 27B. At this time, when the first workpiece 27A is rolled up by the six cylinder-forming dies 51 to 56 surrounding the core member 50, the bent workpiece flange portion 27BB is moved into grooves formed in the respective cylinder-forming dies 51 to 56, and is thus supported by the respective cylinder-forming dies 51 to 56.

To begin with, as depicted in FIG. 11A, the first workpiece 27A with the bent workpiece flange portion 27BB is placed upon the core member 50, and the first workpiece 27A is pressed from above by the first cylinder-forming die 51 (first die-molding step). Subsequently, as depicted in FIG. 11B, the second and third cylinder-forming dies 52 and 53 that are respectively positioned on the upper-left side and the upper-right side are moved in the arrow directions, whereby the upper hemispherical shape of the cylindrical portion 27a depicted in FIG. 11B is formed (second die-molding step).

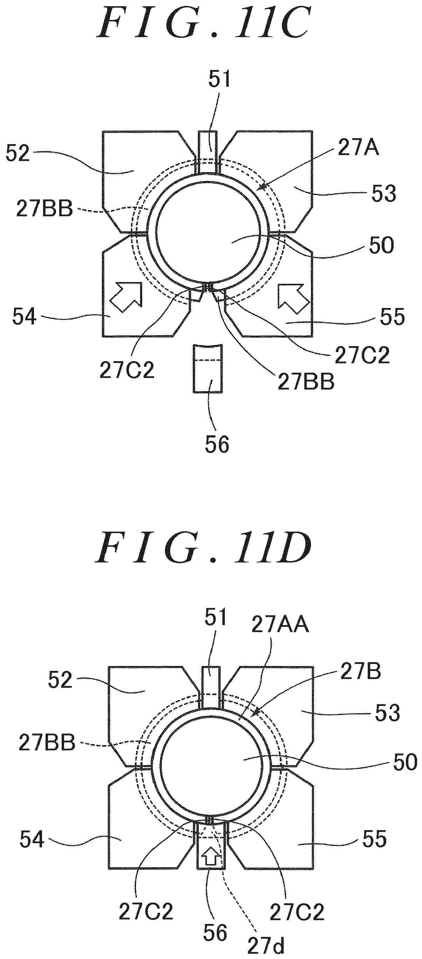

Subsequently, as depicted in FIG. 11C, the fourth and fifth cylinder-forming dies 54 and 55 that are positioned on the lower-left side and the lower-right side are moved in the arrow directions, whereby the rough shape of the lower hemisphere of the cylindrical portion 27a is formed (third die-molding step). Finally, as depicted in FIG. 11D, the sixth cylinder-forming die 56 is pressed against the contact portions at circumferential ends of the cylindrical portion 27a, whereby the second workpiece 27B is formed (fourth die-molding step).

At this time, in the second workpiece 27B, between both end surfaces of the workpiece flange portion 27BB, the notch 27d having a fan shape is formed. This is because the circumference of a radially outer portion of the flange portion 27b having an annular shape is longer than the circumference of a radially inner portion thereof. Thus, both end surfaces of the workpiece flange portion 27BB are not in contact with each other, and thus are insulated from each other.

At the step S30, at the circumferential ends of the second workpiece 27B, the workpiece edges 27C1 and 27C1 are joined to each other and the workpiece edges 27C2 and 27C2 are joined to each other by resistance welding, and thus the retainer 27 depicted in FIG. 5A and FIG. 5B is formed. The resistance welding is a known technique in which a current is caused to flow between joints of members the surfaces of which are in contact with each other, and heat depending on the electrical resistance between the joints is generated between the joints, whereby the temperature of the joints is raised, and thus the joints are melted to be welded together. Thus, detailed description thereof is omitted.

At the step S30, both end surfaces of the workpiece flange portion 27BB face each other while being insulated from each other with the notch 27d therebetween as described above. The length L1 of the workpiece edges 27C1 and 27C1 and the length L2 of the workpiece edges 27C2 and 27C2 are the same. Thus, when a current is caused to flow between the workpiece edges 27C1 and 27C1 and between the workpiece edges 27C2 and 27C2, the electrical resistances between the respective workpiece edges are the same.

Thus, when a current is caused to flow between the workpiece edges 27C1 and 27C1 and between the workpiece edges 27C2 and 27C2, the temperatures rise in the same temperature-rising pattern, and the same melted state can be obtained. This makes it possible to join the workpiece edges 27C1 and 27C1 and join the workpiece edges 27C2 and 27C2 while maintaining the contact state therebetween in the same state before the welding. Thus, the completed retainer 27 is less likely to distort.

The workpiece edges 27C1 and 27C1 and the workpiece edges 27C2 and 27C2 are both end portions of the retainer groove 26 (workpiece groove 26A) in the axial direction of the retainer 27, and are formed on the central axis of the retainer groove 26 (workpiece groove 26A). Thus, the length thereof is sufficiently short. Accordingly, the electrical resistance between the workpiece edges 27C1 and 27C1 and between the workpiece edges 27C2 and 27C2 is high, which enables a desired temperature to be reached in a short time. Thus, a situation in which the temperature of the joints gradually increases over a long period of time and consequently the temperature of the entire retainer 27 increases can be prevented, whereby deformation of the retainer 27 and the retainer grooves 26 (workpiece grooves 26A) can be prevented. Consequently, the yield can be increased, and the retainer can be produced at low cost.

The following describes operation of the steering system 10 configured as described above. When the steering wheel 12 is steered, steering torque is transmitted to the steering shaft 13, whereby the steering operation shaft 19 is moved in the axial direction via the rack-and-pinion mechanism including the pinion 13a and the rack 22.

The steering torque transmitted to the steering shaft 13 is detected by the torque detection device 14. The rotational position of the output shaft 37 of the motor M, for example, is detected by a rotation-angle detection sensor (not depicted). Based on the steering torque and the rotational position of the motor M, for example, the motor M is controlled to generate assist force. The assist force generated by the motor M is converted into axial movement of the steering operation shaft 19 by the ball screw device 40 to reduce steering force that the driver needs to apply to the steering wheel 12.

When the ball nut 21 is rotated together with the output shaft 37 by the motor M, the rolling balls 24 are caused to roll in the circumferential direction while rotating in the same direction between the ball screw shaft 20 and the ball nut 21. At this time, the rolling balls 24 adjacent in the raceway are moved while being separated from each other by the separating portions 28 of the retainer 27 and also being pressed by the separating portions 28. Thus, it is possible to smoothly operate the ball screw device 40 while preventing the balls from hitting each other and from staying uncirculated. This can prevent fluctuation of running torque, and can reduce operation noise.

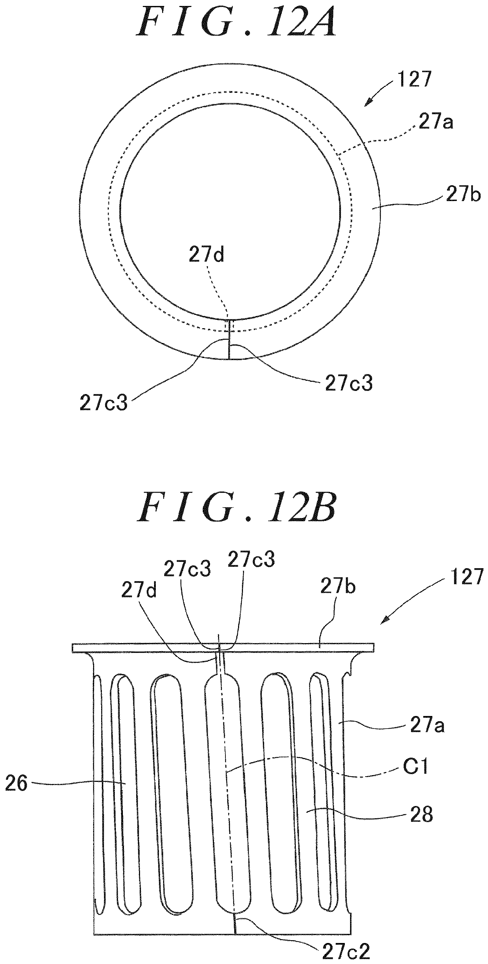

In the first embodiment, the notch 27d is formed in the flange portion 27b of the retainer 27. However, the present invention is not limited to this. As a second embodiment, in a retainer 127, the notch 27d may be formed in the cylindrical portion 27a, and butt joints 27c3 (corresponding to weld joints) may be formed in the flange portion 27b as depicted in FIG. 12A and FIG. 12B. In this case, the butt joints 27c3 of the flange portion 27b and the butt joints 27c2 formed in the cylindrical portion 27a on the side where the flange portion 27b is not positioned are preferably formed so as to have the same length. By this configuration, advantageous effects similar to those in the first embodiment can be expected. A method for producing the retainer 127 is similar to the method for producing the retainer 27 in the first embodiment.

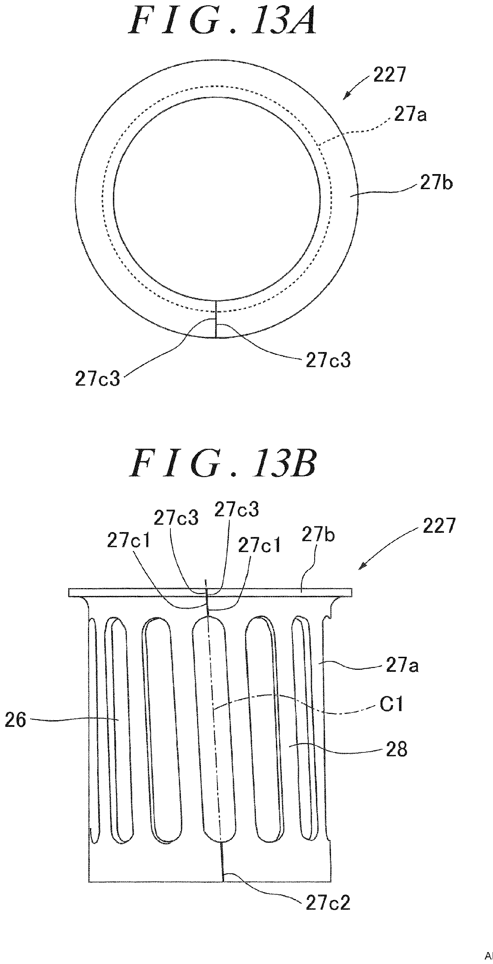

As a third embodiment, the flange portion 27b and the cylindrical portion 27a of a retainer 227 may have no notch 27d. In this case, as depicted in FIG. 13A and FIG. 13B, the length L2 of the butt joints 27c2 formed in the cylindrical portion 27a on the side where the flange portion 27b is not positioned only needs to be changed (increased) such that the length L2 is the same as the total length (L1 + L3) of the length L3 of the butt joints 27c3 of the flange portion 27b and the length L1 of the butt joints 27c1 of the cylindrical portion 27a on the flange portion 27b side. In the third embodiment also, a method for producing the retainer 227 is similar to the method for producing the retainer 27 in the first embodiment.

The present invention is not limited to the embodiments described above, and the retainers 27, 127, and 227 may each consist of the cylindrical portion 27a without the flange portion 27b. In this case, when the retainer 27, 127, or 227 is assembled to the ball screw device 40, axial movement of the retainer 27, 127, or 227 only needs to be restricted by another method such as installation of a snap ring on an inner-peripheral surface of the ball nut 21. Furthermore, each joint only needs to be formed such that the length L1 of the butt joints 27c1 and the length L2 of the butt joints 27c2 are the same. By this configuration, similar advantageous effects can be obtained.

In the embodiments, the butt joints 27c1 and 27c2 in each of the retainers 27, 127, and 227 are formed on the central axis C1 of the retainer groove 26. However, the present invention is not limited to this, and the butt joints 27c1 and 27c2 may be formed so as to be parallel to the axis of the retainer 27. By this configuration, butt joints having a shorter length having a higher electrical resistance can be formed, which can be joined together in a shorter time in resistance welding.

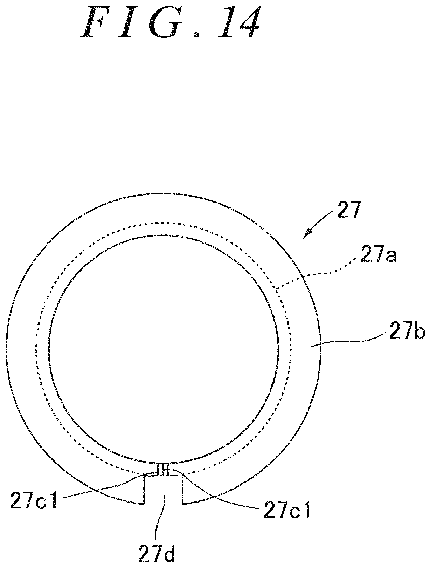

The shape of the notch 27d of the flange portion 27b is not limited to the shape (fan shape) described in the embodiments. As depicted in FIG. 14, the notch 27d may be formed in a rectangular shape, for example. Alternatively, the notch may be cut out by a curve (not depicted).

In the embodiments, the inclined surfaces 26a and 26b that are both side surfaces of each retainer groove 26 are not limited to those described in the embodiments. Both side surfaces of the retainer groove 26 may be configured such that only either one surface thereof is inclined as long as movement of the rolling balls 24 toward the radial outside of the retainer 27 is allowed and movement thereof toward the radial inside of the retainer is restricted by both side surfaces thereof.

The following describes advantageous effects of the embodiments described above. According to the embodiments, the ball screw device 40 includes: the ball screw shaft 20 (steering operation shaft 19) having the outer-peripheral surface on which the outer-peripheral ball rolling groove 20a is spirally formed; the ball nut 21 having the inner-peripheral surface on which the inner-peripheral ball rolling groove 21a is spirally formed; the rolling balls 24 that are arranged between the outer-peripheral ball rolling groove 20a and the inner-peripheral ball rolling groove 21a in a circulatable manner; and the retainer 27, 127, or 227 disposed between the outer periphery of the ball screw shaft 20 and the inner periphery of the ball nut 21, and having the cylindrical portion 27a with the retainer grooves 26 that retain the rolling balls 24. The inclined surfaces 26a and 26b that are both side surfaces of each retainer groove 26 are formed so as to allow movement of the rolling balls 24 toward a radial outside of the retainer 27, 127, or 227 and to restrict movement of the rolling balls 24 toward a radial inside of the retainer 27, 127, or 227. The retainer 27, 127, or 227 has the butt joints 27c1 and 27c2 (weld joints) at the opposite ends of one retainer groove 26 among the retainer grooves 26 in the axial direction of the retainer.

The butt joints 27c1 and 27c2 are formed in small areas at the opposite ends of the retainer groove 26, instead of being formed along, for example, all the length of the retainer 27, 127, or 227 in the axial direction. Thus, the butt joints 27c1 and 27c1 can be joined to each other and the butt joints 27c2 and 27c2 can be joined to each other by welding, for example, in a shorter time than in the case that long butt joints are joined to each other. This can suppress temperature increase in the retainers 27, 127, and 227, and thus deformation of the retainers 27, 127, and 227 and the retainer groove 26 caused by the temperature increase can be satisfactorily suppressed. Thus, the yield of the retainers 27, 127, and 227 can be increased, and the cost of the retainers 27, 127, and 227 and consequently the cost of the ball screw device 40 including the retainer 27, 127, or 227 can be reduced.

According to the embodiments, the joint lengths of the butt joints 27c1 and 27c2 (weld joints) at the opposite ends of the retainer groove 26 are the same. Thus, when resistance welding is performed on workpiece edges 27C1 and 27C2 before being welded that correspond to the butt joints 27c1 and 27c2 (weld joints), respectively, the electrical resistance between the workpiece edges 27C1 and 27C1 and the electrical resistance between the workpiece edges 27C2 and 27C2 are the same.

Thus, between the respective joints, the temperatures rise in the same temperature-rising pattern, and the same melted state can be obtained. This makes it possible to join the respective joints while maintaining the contact (angle) state therebetween in the same state before the welding. Thus, the completed retainer 27 is less likely to distort.

According to the embodiments, the butt joints 27c1 and 27c2 (weld joints) at the opposite ends of the retainer groove 26 extend on the central axis C1 of the retainer groove 26. Thus, the workpiece edges 27C1 and 27C2 can be easily and accurately formed in a forming process.

According to the first to third embodiments, the retainer 27, 127, or 227 has, on one end of the cylindrical portion 27a, a flange portion 27b that is capable of being in contact with an end surface 21d of the ball nut 21. By this low-cost configuration, the retainer 27, 127, or 227 can be fixed to the ball screw device 40. According to the second and third embodiments, the flange portion 27b of the retainer 127 or 227 has butt joints 27c3 (weld joints). This can reduce the influence of heat on the cylindrical portion 27a during the resistance welding.

According to the first and second embodiments, the butt joints (27c1, 27c3) on the flange portion 27b side among the butt joints 27c1, 27c2, and 27c3 at the opposite ends of the retainer groove 26 have a notch 27d. By this configuration, the length (L1, L3, or L1 + L3) of the butt joints on the flange portion 27b side and the length L2 of the butt joints on the side where the flange portion 27b is not positioned (on the opposite side from the flange portion 27b) can be easily set equal to each other.

According to the first embodiment, the notch 27d is formed in the flange portion 27b. Because the flange portion 27b is formed in an annular shape, the circumference thereof in a radially outer portion is different from the circumference thereof in a radially inner portion. By utilizing this length difference, the notch 27d can be easily formed.

According to the embodiments, a steering system 10 includes the ball screw device 40. Because the ball screw device 40 that can be produced at low cost as described above is used, the cost of the steering system 10 can be reduced.

According to the embodiments, the method for producing the retainer 27, 127, or 227 used in the ball screw device 40 includes: the step S10 of stamping out the flat plate to form the first workpiece 27A that is the plate member having the workpiece groove 26A corresponding to the retainer groove 26 and the workpiece edges 27C1 and 27C2 corresponding to the butt joints 27c1 and 27c2, respectively; the step S20 of rolling up the first workpiece 27A to form the second workpiece 27B that has the first plate portion corresponding to the cylindrical portion 27a and having the shape identical to that of the cylindrical portion 27a; and the step S30 of joining the workpiece edges 27C1 and 27C1 at the circumferential ends of the second workpiece 27B to each other and joining the workpiece edges 27C2 and 27C2 at the circumferential ends thereof to each other by resistance welding to form the retainer 27, 127, or 227. By this method, the retainers 27, 127, and 227 according to the embodiments can be obtained.

According to the embodiments, in the method for producing the retainer 27, 127, or 227 used in the ball screw device 40, the first workpiece 27A has, on one end of the cylindrical portion 27a, a workpiece flange portion 27BB (second plate portion) corresponding to the flange portion 27b that is capable of being in contact with the end surface 21d of the ball nut 21. The workpiece edges 27C1 and 27C1 and the workpiece edges 27C2 and 27C2 that are formed on both ends of the first workpiece 27A are formed so as to be parallel to each other. In this production method, at the step of forming the second workpiece 27B, the workpiece flange portion 27BB of the first workpiece 27A corresponding to the flange portion 27b is bent, and then the first workpiece 27A is rolled up to form the second workpiece 27B such that the workpiece cylindrical portion 27AA (first plate portion) corresponding to the cylindrical portion 27a and the workpiece flange portion 27BB corresponding to the flange portion 27b have shapes that are identical to those of the cylindrical portion 27a and the flange portion 27b, respectively. By this method, the retainers 27, 127, and 227 according to the embodiments can be obtained.

In the embodiments, each joint is formed such that the butt joints 27c1 and the butt joints 27c2 have the same length (L1 = L2). However, the present invention is not limited to this. If both of the butt joints 27c1 and 27c2 are sufficiently short, these joints do not have to have the same length. When the lengths of the butt joints 27c1 and 27c2 are sufficiently short, temperatures at both of the joints 27c1 and 27c2 rise up to the temperature at which these joints can be formed in a short time in resistance welding. Thus, tilt is less likely to occur between the joints 27c1 and 27c2. The "sufficiently short length" herein is determined in advance based on tests, for example. Welding for forming the butt joints 27c1 and 27c2 may be performed by arc welding or laser welding.

In the embodiments, examples have been described in which the ball screw device 40 is used for the electric power steering system 10, for example. However, the present invention may be applied to a ball screw device used in a machine tool, for example, in the same manner.

In the embodiments, the steering assist mechanism 30 applies steering assist force to the steering operation shaft 19, using as a driving source the motor M having a rotary shaft disposed parallel to the ball screw shaft of the steering operation shaft 19. However, the present invention is not limited to this. The steering assist mechanism may be of a type described in a related art (JP 5120040) in which the rotary shaft of a motor is disposed coaxially with the ball screw shaft of the steering operation shaft 19. In this case also, similar advantageous effects can be expected.

## Claims

1. A ball screw device comprising:
a ball screw shaft having an outer-peripheral surface on which an outer-peripheral ball rolling groove is spirally formed;
a ball nut having an inner-peripheral surface on which an inner-peripheral ball rolling groove is spirally formed;
rolling balls arranged between the outer-peripheral ball rolling groove and the inner-peripheral ball rolling groove in a circulatable manner; and
a retainer disposed between an outer periphery of the ball screw shaft and an inner periphery of the ball nut, and having a cylindrical portion with a retainer groove that retains the rolling balls, wherein
both side surfaces of the retainer groove are formed so as to allow movement of the rolling balls toward a radial outside of the retainer and to restrict movement of the rolling balls toward a radial inside of the retainer, and
the retainer has a weld joint at both of opposite ends of the retainer groove in an axial direction of the retainer.

2. The ball screw device according to claim 1, wherein the weld joint is a butt joint.

3. The ball screw device according to claim 1 or 2, wherein weld lengths of the weld joints at the opposite ends of the retainer groove are identical.

4. The ball screw device according to any one of claims 1 to 3, wherein the weld joints at the opposite ends of the retainer groove extend on a central axis of the retainer groove.

5. The ball screw device according to any one of claims 1 to 4, wherein the retainer has, on one end of the cylindrical portion, a flange portion that is allowed to come into contact with an end surface of the ball nut.

6. The ball screw device according to claim 5, wherein the flange portion has the weld joint.

7. The ball screw device according to claim 5 or 6, wherein the weld joint on the flange portion side among the weld joints at the opposite ends of the retainer groove has a notch.

8. The ball screw device according to claim 7, wherein the notch of the weld joint is formed in the flange portion.

9. A steering system comprising the ball screw device as claimed in any one of claims 1 to 8.

10. A method for producing a retainer used in the ball screw device as claimed in any one of claims 1 to 8, the method comprising:
stamping out a flat plate to form a first workpiece that is a plate member having a workpiece groove corresponding to the retainer groove and workpiece edges corresponding to the weld joints;
rolling up the first workpiece to form a second workpiece that has a first plate portion corresponding to the cylindrical portion and having a shape identical to that of the cylindrical portion; and
joining the workpiece edges at circumferential ends of the second workpiece to each other by welding to form the retainer.

11. The method for producing a retainer according to claim 10, wherein
the first workpiece has, on one end of the cylindrical portion, a second plate portion corresponding to the flange portion that is allowed to come into contact with the end surface of the ball nut,
the workpiece edges that are formed on the opposite ends of the first workpiece are formed so as to be parallel to each other, and
at the forming of the second workpiece, the second plate portion of the first workpiece corresponding to the flange portion is bent, and then the first workpiece is rolled up to form the second workpiece such that the first plate portion corresponding to the cylindrical portion and the second plate portion corresponding to the flange portion have shapes that are identical to those of the cylindrical portion and the flange portion, respectively.
